# EUROPÄISCHE PATENTSCHRIFT

(11) **EP 2 876 279 B1**
(45) Veröffentlichungstag und Bekanntmachung des Hinweises auf die Patenterteilung: **07.09.2016**
(21) Anmeldenummer: 14192952.1
(22) Anmeldetag: 13.11.2014
(51) Int. Cl.: F02C 3/113, F02C 3/13, F02C 6/00, F02C 6/18, F02C 7/143, F02C 9/18, F02C 7/10, F02C 3/34, F01D 1/02

(54) **Mikrogasturbinenanordnung**
Micro gas turbine assembly
Système de micro-turbine à gaz

(30) Priorität: 21.11.2013 DE 102013112851
(43) Veröffentlichungstag der Anmeldung: 27.05.2015
(73) Patentinhaber: Deutsches Zentrum für Luft- und Raumfahrt e.V., 51147 Köln (DE)
(72) Erfinder: Huber, Andreas, 70374 Stuttgart (DE); Henke, Martin, 70174 Stuttgart (DE); Hasemann, Stefan, 71672 Marbach (DE)
(74) Vertreter: Albrecht, Ralf

(56) Entgegenhaltungen:
- EP-A1- 1 057 986
- WO-A2-01/31180
- US-A1- 2002 152 754

## Beschreibung

Die vorliegende Erfindung betrifft eine Mikrogasturbinenanordnung mit
- einem Verdichter,
- einer Brennkammer, welche einlassseitig an eine Verbrennungsluftzuführleitung angeschlossen ist und in welcher Brennstoff mit angesaugter Verbrennungsluft verbrannt wird,
- einer Turbine, die mit der Auslassseite der Brennkammer über eine Rauchgasleitung verbunden ist und durch die heißen Abgase aus der Brennkammer angetrieben wird, und
- einem Generator zur Stromerzeugung,
wobei der Verdichter in einer Abgasleitung stromabwärts von der Turbine angeordnet ist, und
wobei der Verdichter und der Generator auf einer gemeinsamen Turbinenwelle sitzen und über die Turbine angetrieben werden.

Solche Mikrogasturbinenanordnungen mit oder ohne Generator zur Stromerzeugung sind beispielsweise aus der US 2002/0152754 A1 oder aus der EP 1 057 986 A1 bekannt.

Auf dem Weg zu einer emissionsarmen Energieversorgung werden die fossilen Energieträger Kohle, Öl und Erdgas noch einen wesentlichen Beitrag leisten müssen. Da diese Energieträger nur noch begrenzt zur Verfügung stehen und ihre Verbrennung außerdem zur Emission von Treibhausgasen führt, gilt es, diese Ressourcen sparsam und umweltfreundlich zu verwenden.

Die sogenannte Kraft-Wärme-Kopplung (KWK) soll hierbei einen wesentlichen Beitrag leisten. Bei dieser Technologie werden Strom und Wärme nicht örtlich getrennt in verschiedenen Anlagen, sondern als Koppelprodukte gemeinsam in einer Anlage erzeugt. Hierdurch können hohe Nutzungsgrade erzielt werden, so dass die auftretenden Energieverluste gering sind. Gleichzeitig werden umweltschädliche Emissionen auf einem niedrigen Niveau gehalten. Schließlich werden durch die dezentrale Stromerzeugung die elektrischen Versorgungsnetze entlastet.

Die Anwendung der Kraft-Wärme-Kopplung in zentralen Heizkraftwerken ist derzeit Ballungsgebieten vorbehalten, da die Leitung von Wärme über größere Distanzen zum einen sehr aufwendig, und zum anderen mit hohen Verlusten behaftet ist. Insofern wird die Technologie der dezentralen Kraft-Wärme-Kopplung in erster Linie in kleinen und mittelgroßen Blockheizkraftwerken (BHKW) eingesetzt, die ohne aufwendige Wärmeverteilungsnetze auskommen und derzeit hohe Gesamtwirkungsgrade im Bereich von 90% erreichen. Primäre Einsatzgebiete sind hierbei große Wohngebäude, Krankenhäuser sowie Industrie- und Gewerbebetriebe. Zusätzlich ist geplant, dezentrale BHKW-Anlagen als sogenannte virtuelle Kraftwerke einzusetzen, die Kapazitätsschwankungen in den Stromnetzen bei wachsenden Stromanteilen aus erneuerbaren Energien ausgleichen sollen.

Die Hauptkomponenten eines Blockheizkraftwerkes sind ein Antriebsaggregat, ein Generator zur Stromerzeugung und ein Wärmeübertrager zur Wärmeauskopplung. Darüber hinaus umfasst die Ausrüstung eines Blockheizkraftwerkes in der Regel Steuerungs- und Regelungseinrichtungen, Komponenten zur Minderung von Schadstoffemissionen wie beispielsweise Drei-Wege-Katalysatoren zur Stickoxidreduzierung und CO-Oxidation, eine Abgasanlage, Schallschutzeinrichtungen etc. Als Antriebsaggregate kommen in den meisten Fällen Verbrennungsmotoren zum Einsatz. In jüngerer Zeit werden auch in zunehmendem Maße Gasturbinen und hier insbesondere kompakte Gasturbinen mit einer Leistung bis herunter zu 30kWₑₗ, die auch Mikrogasturbinen genannt werden, zum Einsatz. Beim Einsatz einer Mikrogasturbine als Antriebsaggregat ist üblicherweise ein Rekuperator zur Erhöhung des elektrischen Wirkungsgrades der Mikrogasturbinenanordnung vorgesehen. Derartige Mikrogasturbinen arbeiten nach dem Joule-Prozess und umfassen einen Verdichter (Kompressor), der aus der Umgebung Luft ansaugt und sie verdichtet. Die verdichtete Luft tritt in einem Rekuperator ein, in dem sie durch heiße Abgase vorgewärmt wird. In der Brennkammer wird die verdichtete und vorgewärmte Luft mit eingedüstem Brennstoff unter nahezu konstantem Druck verbrannt. Die bei der Verbrennung entstehenden Verbrennungsgase werden in einer Turbine entspannt, wodurch die Turbinenwelle mit ihren Komponenten angetrieben wird. Dabei wird ein Teil der in den Verbrennungsgasen enthaltenen Enthalpie in mechanische Energie umgewandelt. Ein Großteil dieser mechanischen Energie (bis zu etwa 70%) wird zum Antrieb des Verdichters genutzt, welcher auf der Welle der Turbine sitzt, der verbleibende Teil steht als nutzbare elektrische Energie Wₑₗ zur Verfügung, die durch Umwandlung von mechanischer Energie im Generator erzeugt wird, der ebenfalls von der Turbine angetrieben wird. Die noch heißen Abgase wärmen im Rekuperator die Verbrennungsluft vor und verlassen danach die Mikrogasturbine. Die verbleibende thermische Energie des Abgases wird daraufhin je nach Anwendungsgebiet verwertet.

Alternativ zu den vorbeschriebenen Hochdruck-Mikrogasturbinen, bei denen der Verdichter die angesaugte Luft durch die Mikrogasturbine drückt, sind auch Mikrogasturbinen bekannt, die im subatmosphärischen Bereich betrieben werden (inverse Mikrogasturbinen) und nach dem sogenannten Inverted Brayton Cycle arbeiten. Bei diesen im subatmosphärischen Bereich arbeitenden Mikrogasturbinen ist der Verdichter in der Abgasleitung stromabwärts von der Turbine und insbesondere von dem Rekuperator angeordnet und zieht oder saugt die Verbrennungsluft durch die Brennkammer und die Turbine.

BHKW-Anlagen bzw. Mikrogasturbinen werden im Allgemeinen für lange Laufzeiten mit Volliast konzipiert, um wirtschaftlich betrieben werden zu können. Daher ist eine Anpassung an den Strom- und Wärmebedarf der angeschlossenen Verbraucher erforderlich. Da das BHKW Strom und Wärme stets als Koppelprodukte in einem nahezu festen Verhältnis zueinander liefern, muss der Strom- oder der Wärmebedarf der Verbraucher als Führungsgröße für die Auslegung und den Betrieb des BHKW ausgewählt werden. Der erzeugte Strom wird üblicherweise von den an das BHKW angeschlossenen Verbrauchern selbst genutzt, überschüssige Energie kann in das öffentliche Netz eingespeist werden. Die in dem BHKW erzeugte Wärme kann jedoch bei zurückgehendem Wärmebedarf der angeschlossenen Verbraucher nicht oder nur in begrenztem Umfang, zum Beispiel in einem Wärmespeicher, zwischengespeichert werden.

Daher wird in den meisten Fällen der Wärmebedarf der Verbraucher als Führungsgröße für den Betrieb eines BHKW gewählt. Bei dieser wärmegeführten Betriebsweise bestimmt die Wärmenachfrage die Laststufe des BHKW.

Mikrogasturbinen zeichnen sich im Teillastbetrieb aufgrund der drehzahlgesteuerten Fahrweise durch einen deutlich verringerten elektrischen Wirkungsgrad und erhöhte CO-Emissionen aus. Der verringerte Wirkungsgrad im Teillastbetrieb ist auf das reduzierte Druckverhältnis, welches durch die im Verhältnis zum Voillastbetrieb geringere Drehzahl und den reduzierten Massenstrom bedingt ist, und der damit verbundenen geringeren Turbineneintrittstemperatur bei konstant erhaltener Turbinenaustrittstemperatur zurückzuführen. Ferner muss das mögliche Luft-Brennstoff-Verhältnis zwischen Voillastbetrieb und Teillastbetrieb abgestimmt werden. In der Regel wird die Teillast durch die magere Löschgrenze und die aufgrund der geringeren Flammentemperatur erhöhten CO-Emissionen begrenzt. Zwischen Teillast und Voillast erhöht sich aufgrund des steigenden Druckverhältnisses der Brennstoffmassenstrom stärker als der Luftmassenstrom, was zu einem niedrigeren Luft-Brennstoff-Verhältnis führt. Dies kann zu erhöhten NOx-Emissionen aufgrund der erhöhten Flammentemperatur führen. Ein weiteres Problem bei derzeitigen Mikrogasturbinen stellt die hohe Materialbeanspruchung und die damit verbundene geringere Lebensdauer der Heißgasbauteile aufgrund des Teillastbetriebes und der damit verbundenen Laständerungen/Laständerungsgeschwindigkeiten dar.

Wegen dieser mit dem Teillastbetrieb verbundenen Probleme und der Forderung nach hohen Betriebsstunden sowie einer hohen Effizienz werden Blockheizkraftwerke/Mikrogasturbinen vorwiegend im Voillastbetrieb betrieben, so dass die abgegebene Wärmemenge relativ konstant ist und kaum variiert werden kann. Um den gesamten Wärmebedarf über das Jahr abzudecken, können BHKW nur mit Hilfe eines Spitzenlastkessels und eines Wärmespeichers betrieben werden, um die in Spitzenzeiten benötigte Wärmeenergie zur Verfügung stellen zu können. Im Rahmen der Energiewende und dem Ausbau der erneuerbaren Energien werden in Zukunft jedoch hochflexible Kraftwerke, die eine flexible Wärmeauskopplung ermöglichen und auch bei niedrigem Teillastbetrieb mit hohen elektrischen Wirkungsgraden und gleichzeitig geringen Emissionen betrieben werden können, eine entscheidende Rolle zur Sicherstellung des Strombedarfs und zur Stabilisierung des Netzes spielen.

Aufgrund dieser Problematik gehen die Bestrebungen dahin, den elektrischen Wirkungsgrad und die Umweltverträglichkeit von Mikrogasturbinen im Teillastbetrieb zu verbessern, um auf diese Weise die Möglichkeit zu schaffen, Mikrogasturbinen bzw. BHKW auch effizient im Teillastbetrieb betreiben zu können und somit auf Änderungen beim Leistungsbedarf, insbesondere beim Wärmebedarf durch Umschaltung zwischen Volllast- und Teillastbetrieb reagieren zu können.

Ferner ist aufgrund des geringen Wasseranteils im Abgas der Mikrogasturbinenanordnung als Folge des hohen Luftüberschusses eine Brennwertnutzung, wie sie im Bereich der modernen Heizungsbrenner mit einem geringen Luftüberschuss üblich ist, nicht möglich.

Aufgabe der vorliegenden Erfindung ist es daher, eine Mikrogasturbine und ein BHKW auf Mikrogasturbinenbasis der eingangs genannten Art so auszugestalten, dass ein optimierter Teillastbetrieb möglich ist.

Diese Aufgabe ist erfindungsgemäß bei einer Mikrogasturbinenanordnung der eingangs genannten Art dadurch gelöst, dass in der Abgasleitung ein zuschaltbarer Teillastverdichter angeordnet ist und Schaltmittel vorgesehen sind, um in einem Teillastbetrieb der Mikrogasturbinenanordnung den Teillastverdichter zuzuschalten, so dass die Turbine verlassende Abgase von dem Verdichter und dem Teillastverdichter angesaugt und verdichtet werden, und im Volllastbetrieb den Teillastverdichter wegzuschalten, so dass die Abgase nur im Verdichter komprimiert, jedoch an dem Teillastverdichter vorbei geführt werden. Dabei kann in der Verbrennungsluftzuführleitung der Brennkammer vorgeschaltet ein Rekuperator vorgesehen sein, um Verbrennungsluft vor dem Eintritt in die Brennkammer vorzuwärmen, wobei die warme Seite des Rekuperators mit der Turbine über die Abgasleitung verbunden ist, um dem Rekuperator heiße Abgase zuzuführen, und der Rekuperator vorzugsweise dem Verdichter und Teillastverdichter vorgeschaltet in der Abgasleitung positioniert ist.

Der vorliegenden Erfindung liegt somit die Überlegung zugrunde, die Verbrennungsluft im Teillastbetrieb zweistufig anzusaugen und zu verdichten. Es hat sich gezeigt, dass es durch den zusätzlich vorgesehenen Teillastverdichter möglich ist, ein konstantes oder nahezu konstantes Druckverhältnis zwischen Teillastpunkt (in der Regel 50 bis 75% Drehzahl) und Voillastpunkt über verschiedene Drehzahlen und Massenströme bereitzustellen. Mit dem erreichten konstanten Druckniveau/Druckverhältnis zwischen Teillast und Volllast kann bei gleichbleibender Turbinenaustrittstemperatur die Turbineneintrittstemperatur auf gleichem Niveau gehalten werden. Auf diese Weise kann im Teillastbetrieb ein ähnlich hoher elektrischer Wirkungsgrad erreicht werden wie im Voillastbetrieb.

Ferner kann die Verbrennung in Teillast, Volllast und zwischen Teil- und Voillast mit ähnlich optimalem Brennstoff-Luftverhältnissen und damit ähnlichen Flammentemperaturen und CO- und NOx-Emissionen betrieben werden. Die einzige Einschränkung besteht darin, dass die Brennkammer in Teillast mit einem reduzierten Volumenstrom arbeiten muss, was gegebenenfalls Einfluss auf die Brennstoff/Luftmischungsqualität und die lokalen Flammentemperaturen haben kann.

Im Ergebnis bleiben aufgrund des erreichten konstanten Druckverhältnisses und den damit konstanten Turbineneintritts/Turbinenaustritts-Temperaturen und Verdichteraustrittstemperaturen, die gleichbedeutend zu gleichbleibenden Rekuperatoreintritts- und -austrittstemperaturen sind, die thermischen Belastungen der Mikrogasturbine im Teil- und Voillastbetrieb nahezu konstant. Damit wird die Mikrogasturbine weniger durch Lastwechsel beeinflusst, so dass die Lebensdauer der Heißgasbauteile erhöht wird.

Da zwischen der Turbine und dem Verdichter ein subatmosphärischer Druck herrscht, sind die Volumenströme durch die Mikrogasturbinenanordnung hoch. Entsprechend können große Turbinen und Verdichter eingesetzt werden, die gegenüber kleineren Varianten über einen besseren Wirkungsgrad verfügen und außerdem weniger Toleranzprobleme mit sich bringen.

Gemäß einer Ausführungsform der Erfindung ist vorgesehen, dass die Abgasleitung eine parallel zu dem Teillasterverdichter geschaltete und diesen umgehende Teillastverdichter-Bypassleitung aufweist. In diesem Fall ist als Schaltmittel vorzugsweise ein Ventil in der Teillastverdichter-Bypassleitung angeordnet, über welche ein Luftstrom zum Teillastverdichter im Teillastbetrieb ermöglicht und im Vollastbetrieb verhindert wird. Dabei können Steuer- oder Absperrventile zum Einsatz kommen.

Gemäß einer Ausführungsform der Erfindung ist vorgesehen, dass der Teillastverdichter mit der Turbinenwelle im Teillastbereich über eine Kupplung verbunden ist und von dieser angetrieben wird und im Voillastbetrieb von der Turbinenwelle entkoppelt ist. In diesem Fall kann der unterschiedliche Massenstrom bei ähnlichen Druckverhältnissen in Teil- und Voillast durch geeignete Maßnahmen wie eine variable Turbinengeometrie (VTG) realisiert werden.

Nach einer Ausgestaltung der Erfindung ist vorgesehen, dass in der Rauchgasleitung zwischen der Brennkammer und der Turbine eine zuschaltbare Teillastturbine angeordnet ist und Schaltmittel vorgesehen sind, die im Teillastbetrieb der Mikrogasturbinenanordnung die Teillastturbine zuschalten, so dass die heißen Abgase aus der Brennkammer hintereinander in der Teillastturbine und der Turbine entspannt werden, und im Voillastbetrieb der Mikrogasturbinenanordnung die Teillastturbine abschalten, so dass die heißen Abgase an der Teillastturbine vorbeiströmen und nur in der Turbine entspannt werden.

In diesem Fall kann die Rauchgasleitung eine parallel zu der Teillastturbine geschaltete und diese umgehende Teillastturbinen-Bypassleitung aufweisen, in welcher die Schaltmittel angeordnet sind. Als Schaltmittel kann auch hier wenigstens ein Ventil, insbesondere ein Absperr- oder Steuerventil vorgesehen sein.

Bei dieser Ausgestaltung sitzt der Teillastverdichter bevorzugt auf der Turbinenwelle der Teillastturbine und wird über diese angetrieben. Somit erfolgt nicht nur eine zweistufige Verdichtung, sondern auch eine zweistufige Entspannung der heißen Abgase, wobei die Teillastturbine eine Hochdruckturbinenstufe und die Turbine eine Niederdruckturbinenstufe bildet.

Ebenso ist es möglich, die zuschaltbare Teillastturbine in der Abgasleitung insbesondere zwischen der Turbine und dem Rekuperator anzuordnen, wobei dann Schaltmittel vorgesehen sind, die im Teillastbetrieb der Mikrogasturbinenanordnung die Teillastturbine zuschalten, so dass die heißen Abgase aus der Brennkammer hintereinander in der Turbine und der Teillastturbine entspannt werden, und im Voillastbetrieb der Mikrogasturbinenanordnung die Teillastturbine abschalten, so dass die heißen Abgase an der Teillastturbine vorbeiströmen und nur in der Turbine entspannt werden.

In diesem Fall weist die Abgasleitung vorzugsweise eine parallel zu der Teillastturbine geschaltete und diese umgehende Teillastturbinen-Bypassleitung auf, in welcher die Schaltmittel vorgesehen sind. Auch hier sitzt der Teillastverdichter auf der Turbinenwelle der Teillastturbine und wird über diese angetrieben.

Bei dieser Ausführungsform bildet die Turbine die Hochdruckturbinenstufe und die Teillastturbine die Niederdruckturbinenstufe. Entsprechend liegt das Ventile, über welches die Teillastturbine zugeschaltet oder abgeschaltet wird, auf der Seite der Niederdruckturbinenstufe, d.h. in einem Bereich, in welchem die Abgase aufgrund der Entspannung in der Hochdruckturbinenstufe bereits deutlich abgekühlt sind. Somit kann das Ventil kostengünstig hergestellt oder bei gleicher Materialauswahl länger betrieben werden, so dass es eine erhöhte Lebensdauer besitzt. Bei Mikrogasturbinen mit hohen Turbineneintrittstemperaturen ist der Einsatz von Ventilen stromaufwärts bzw. parallel zur Turbine nicht mehr oder nur mit zusätzlichem Kühlungsaufwand zu bewältigen.

In weiterer Ausgestaltung der Erfindung kann vorgesehen sein, dass zwischen der Turbine und der Teillastturbine ein Zwischenüberhitzer, insbesondere in der Form einer weiteren Brennkammer vorgesehen ist, in welcher im Teillastbetrieb der Mikrogasturbinenanordnung die heißen Abgase weiter erwärmt werden.

Alternativ oder zusätzlich kann zwischen dem Verdichter und dem Teillastverdichter eine Kühleinrichtung insbesondere in der Form eines Wärmetauschers vorgesehen sein, in welchem im Teillastbetrieb der Mikrogasturbinenanordnung die komprimierte Luft vor dem Eintritt in die zweite Verdichtungsstufe abgekühlt wird.

Durch die Maßnahmen einer Zwischenüberhitzung zwischen der Hochdruck- und der Niederdruckturbine bzw. einer Zwischenkühlung zwischen dem Niederdruckverdichter und dem Hochdruckverdichter kann eine weitere Effizienzverbesserung im Teillastbetrieb erreicht werden.

In weiterer Ausgestaltung der Erfindung ist vorgesehen, dass in der Abgasleitung seriell zu dem Rekuperator wenigstens ein weiterer Rekuperator vorgesehen ist, wobei die Rekuperatoren auf der kalten Seite nacheinander von der Verbrennungsluft und auf der heißen Seite von den entspannten heißen Abgasen durchströmt werden. Bei dieser Ausführungsform bildet dann der in Strömungsrichtung des Abgases erste Rekuperator einen Hochtemperatur-Rekuperator und der dahinterliegende Rekuperator einen Niedertemperatur-Rekuperator. Auf diese Weise kann insbesondere beim Niedertemperatur-Rekuperator auf kostenintensive Werkstoffe verzichtet werden.

Zusätzlich können alle Varianten der erfindungsgemäßen Mikrogasturbinenanordnung mit ergänzenden Abgaswärmekonzepten realisiert werden. Beispielsweise kann dem Rekuperator/den Rekuperatoren vor- und/oder nachgeschaltet wenigstens ein Wärmetauscher in der Abgasleitung angeordnet sein, um aus der Mikrogasturbine Wärme auszukoppeln. Ebenso ist es möglich, in der Abgasleitung parallel zu dem Rekuperator/den Rekuperatoren wenigstens einen Wärmetauscher anzuordnen, um Wärme aus der Mikrogasturbinenanordnung auszukoppeln, wobei der Abgasstrom durch den Rekuperator/die Rekuperatoren einerseits und/oder den parallel dazu geschalteten Wärmetauscher andererseits steuerbar ist. Vorzugsweise sind entsprechende Ventilmittel (Steuerventile, Regelventile), welche den Abgasstrom durch den Rekuperator/die Rekuperatoren einerseits und den Wärmetauscher andererseits steuern, stromabwärts von dem Rekuperator/Wärmetauscher vorgesehen, d.h. an einer Stelle, wo die Abgase bereits abgekühlt sind. Auf diese Weise werden die Ventile thermisch nicht stark belastet. Beispielsweise kann ein entsprechendes Ventil an der Stelle vorgesehen sein, wo die Abgasleitung und die parallele Rekuperator-Bypassleitung, in welcher der Wärmetauscher vorgesehen ist, zusammengeführt werden.

Ferner kann vorgesehen sein, dass in der Abgasleitung parallel zu einem Rekuperator in einer Rekuperator-Bypassleitung wenigstens ein Wärmetauscher und parallel zu einem weiteren Rekuperator in einer weiteren Rekuperator-Bypassleitung wenigstens ein Wärmetauscher angeordnet ist, um Wärme aus der Mikrogasturbinenanordnung auszukoppeln, wobei der Abgasstrom durch die Rekuperatoren einerseits und/oder die jeweils parallel dazu geschalteten Wärmetauscher andererseits durch entsprechende Ventilmittel steuerbar ist. Auch hier ist zweckmäßigerweise vorgesehen, dass die Ventilmittel zur Steuerung des Abgasstroms jeweils stromabwärts von den Rekuperatoren und den parallel dazu geschalteten Wärmetauschern angeordnet und insbesondere nur jeweils an der Stelle positioniert sind, wo die Abgasleitung und die Rekuperator-Bypassleitungen, in denen die Wärmetauscher angeordnet sind, zusammengeführt werden.

Im Normalbetrieb sind die Ventilmittel zur Steuerung des Abgasstroms so eingestellt, dass der gesamte Abgasmassenstrom über den Rekuperator geführt wird. Wird nun mehr Wärme, zum Beispiel zur Warmwasser- oder Dampferzeugung benötigt als die Wärmeauskopplung über die ansonsten vorhandene Wärmetauscher liefern kann, werden die Ventilmittel so eingestellt, dass der benötigte Abgasmassenstrom über den parallel zum Rekuperator geschalteten weiteren Wärmetauscher geleitet wird. Im Extremfall wird der gesamte Massenstrom über den Wärmetauscher geleitet, um zusätzliche Wärme auszukoppeln. Hierbei ist zu beachten, dass der Verbrennungsluftmassenstrom jederzeit über den Rekuperator geführt wird und dabei die Verbrennungsluft weniger vorgewärmt wird, wenn der Abgasmassenstrom nicht vollständig über den Rekuperator geführt wird. Die flexible Wärmeauskopplung hat dementsprechend zur Folge, dass bei (vollständiger) Beaufschlagung des Wärmetauschers der Brennstoffmassenstrom in der Brennkammer gesteigert werden muss, was durch eine mehrstufige Brennkammer erreicht werden kann, in der dann die einzelnen Stufen nach Bedarf zugeschaltet werden.

Gemäß einer Ausführungsform der Erfindung kann auch vorgesehen sein, dass in der Verbrennungsluftzuführleitung eine den Rekuperator/die Rekuperatoren umgehende Bypassleitung vorgesehen ist, und dass Ventilmittel vorgesehen sind, um den Abgasstrom durch den Rekuperator/die Rekuperatoren und/oder die parallele Bypassleitung insbesondere in der Weise zu steuern, dass die Massenströme der durch den Rekuperator/die Rekuperatoren strömenden Verbrennungsluft und der durch den Rekuperator/die Rekuperatoren strömenden Abgase gleich ist. Durch diese Ausgestaltung wird die Möglichkeit eröffnet, die einströmende Verbrennungsluft ganz oder teilweise an dem Rekuperator vorbeizuführen. Durch die Umgehung des Rekuperators auf der Verbrennungsluftseite können Druckverluste verringert werden, was den elektrischen Wirkungsgrad erhöht.

In vorteilhafter Weise sind die Einstellungen so gewählt, dass der heiße Abgasmassenstrom und der kalte Verbrennungsluftmassenstrom durch den Rekuperator etwa gleich sind. Wenn demgemäß wie zuvor beschrieben ein Teil des Abgasmassenstromes an dem Rekuperator vorbei durch den in der Rekuperator-Bypassleitung vorgesehenen Wärmetauscher geführt wird, sollte auch ein entsprechender Teil des Verbrennungsluftmassenstroms an dem Rekuperator vorbeigeführt werden. Wenn in umgekehrter Weise Verbrennungsluft an dem Rekuperator vorbeigeführt wird, um Druckverluste zu minimieren, sollte entsprechend auch ein Teil der heißen Abgase an dem Rekuperator vorbei geführt werden. Die Steuerung der Abgasmassenströme kann durch entsprechende Steuer- bzw. Regeleinrichtungen, welche die Ventile betätigen, realisiert werden.

Wenn mehrere Wärmetauscher vorgesehen sind, können die kalten Seiten von mehreren, insbesondere von allen Wärmetauschern miteinander verbunden sein, so dass ein zu erwärmendes Fluid nacheinander in den Wärmetauschern erwärmt wird. Alternativ können einzelne Wärmetauscher auch individuell, d.h. separat voneinander zur Wärmeauskupplung eingesetzt werden. Ferner kann die Abgasleitung mit einer zur Brennkammer bzw. zum Rekuperator vor der Brennkammer führenden Verbrennungsluftzuführleitung verbunden sein, um der Verbrennungsluft vor dem Eintritt in die Brennkammer Abgase zuzumischen. Dadurch, dass ein Teil des Abgases der Mikrogasturbine der Frischluft zugeführt und mit dieser vermischt wird, kann der Wassergehalt im Abgas, je nach Rückführungsrate, entsprechend so erhöht werden, dass - bei entsprechender Rücklauftemperatur des in den Wärmetauschern erwärmten Mediums - der im Abgas enthaltene Wasserdampf auskondensiert und die dabei entstehende sogenannte Kondensationswärme ausgekoppelt werden kann. Als Folge verbessert sich der thermische Wirkungsgrad der Anlage. Zudem reduziert das zugeführte Abgas die maximale Flammentemperatur in der Brennkammer, wobei insbesondere die NOₓ-Emissionen reduziert werden können.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt:
- Figur 1: ein Schaltbild einer ersten Ausführungsform einer Mikrogasturbinenanordnung gemäß der vorliegenden Erfindung,
- Figur 2: ein Schaltbild einer zweiten Ausführungsform einer erfindungsgemäßen Mikrogasturbinenanordnung,
- Figur 3: ein Schaltbild einer dritten Ausführungsform einer erfindungsgemäßen Mikrogasturbinenanordnung,
- Figur 4: einen Ausschnitt einer flexiblen Wärmeauskopplung einer erfindungsgemäßen Mikrogasturbinenanordnung,
- Figur 5: eine Variante der flexiblen Wärmeauskopplung gemäß Figur 4,
- Figur 6: ein Schaltbild eines Ausschnittes einer alternativen flexiblen Wärmeauskopplung für eine Mikrogasturbinenanordnung, und
- Figur 7: ein Schaltbild einer weiteren Variante für eine flexible Wärmeauskopplung für eine Mikrogasturbinenanordnung,

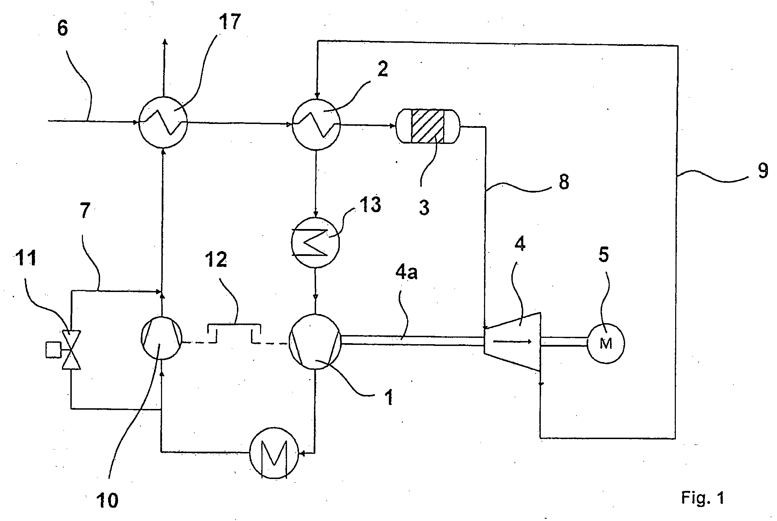

In der Figur 1 ist eine erste Ausführungsform einer Mikrogasturbinenanordnung gemäß der vorliegenden Erfindung schematisch dargestellt. Diese umfasst in üblicher Weise einen Rekuperator 2, der einlassseitig an eine Verbrennungsluftzuführleitung 6 angeschlossen ist, eine Brennkammer 3 und eine Turbine 4, die in Reihe geschaltet sind, sowie einen an die Turbine 4 angeschlossenen Generator 5. Ferner gehört zu der Mikrogasturbinenanordnung ein Verdichter 1, der hier der Turbine 4 und dem Rekuperator 2 nachgeschaltet vorgesehen ist, so dass er Verbrennungsluft ansaugt und saugend durch die Mikrogasturbinenanordnung transportiert. Damit arbeitet die Mikrogasturbinenanordnung im subatmosphärischen Bereich nach dem sogenannten Inverted Brayton Cycle, der allgemein bekannt ist und daher an dieser Stelle nicht im Einzelnen erläutert werden soll. Dem Grundsatz nach wird bei derartigen, im subatmosphärischen Bereich arbeitenden Mikrogasturbinenanordnungen durch den Betrieb des Verdichters 1 Verbrennungsluft durch die Verbrennungsluftzuführleitung 6 in den Rekuperator 2 gesaugt und dort vorgewärmt. Die vorgewärmte Verbrennungsluft wird dann der nachgeschalteten Brennkammer 3 zugeführt, in welcher Brennstoff mit der vorgewärmten Verbrennungsluft verbrannt wird. Die bei der Verbrennung entstehenden heißen Abgase werden der Turbine 4 zugeführt, welche mit der Auslassseite der Brennkammer 3 über eine Rauchgasleitung 8 verbunden ist und durch die heißen Abgase aus der Brennkammer 3 angetrieben wird. Die Turbine 4 wiederum treibt einerseits den Verdichter 1 und andererseits den Generator 5 an, die hierzu auf der Turbinenwelle 4a sitzen. Auslassseitig ist die Turbine 4 mit der heißen Seite des Rekuperators 2 über eine Abgasleitung 9 verbunden, um die entspannten, warmen Abgase dem Rekuperator 2 zuzuführen, wo sie zur Vorwärmung der Verbrennungsluft verwendet werden.

Erfindungsgemäß ist in der Abgasleitung 9 ein Teillastverdichter 10 vorgesehen, der im Teillastbetrieb der Mikrogasturbinenanordnung zugeschaltet werden kann, so dass die Abgase in dem Verdichter 1 und in dem Teillastverdichter 10 zweistufig komprimiert werden. Im Voillastbetrieb wird der Teillastverdichter 10 weggeschaltet, so dass die Abgase in an sich bekannter Weise nur in dem Verdichter 1 komprimiert und an dem Teillastverdichter 10 vorbeigeführt werden.

Hierzu weist die Abgasleitung 9 eine parallel zu dem Teillastverdichter 10 geschaltete und diesen umgehende Teillastverdichter-Bypassleitung 7 auf, in welcher Schaltmittel in der Form eine Ventils 11 vorgesehen sind. Über das Ventil 11 kann die Teillastverdichter-Bypassleitung 7 geschlossen werden, so dass die aus dem Verdichter 1 austretenden, komprimierten Abgase direkt zu dem Teillastverdichter 10 geführt werden, um dort nachverdichtet zu werden. Alternativ kann das Ventil 11 geöffnet werden, so dass die aus dem Verdichter 1 kommenden Abgase durch die Teillastverdichter-Bypassleitung 7 an dem Teillastverdichter 10 vorbeigeführt werden. Der Strom durch den stillstehenden Teillastverdichter 10 ist aufgrund des Strömungswiderstandes, den der Teillastverdichter 10 dem Abgasstrom entgegensetzt, minimal. Das Ventil 11 kann als Schalt-, Steuer- oder Regelventil ausgebildet sein.

Wie in Figur 1 erkennbar ist, wird im Teillastbetrieb die Welle des Teillastverdichters 10 mit der Turbinenwelle 4a über eine Kupplung 12 verbunden, so dass der Teillastverdichter 10 ebenfalls über die Turbine 4 angetrieben wird.

Zur weiteren Optimierung des Prozesses ist in der Abgasleitung 9 ein Wärmetauscher 13 zwischen dem Rekuperator 2 und dem Verdichter 1 vorgesehen. Dieser Wärmetauscher 13 fungiert als eine Kühleinrichtung, um die heißen Abgase vor dem Eintritt in den Verdichter 1 abzukühlen, so dass der Verdichter 1 weniger Arbeitsleitung benötigt. Dem Verdichter 1 nachgeordnet ist in der Verbrennungsluftleitung 9 ferner ein Zwischenkühler in der Form eines Wärmetauschers 18b angeordnet, um die Abgase insbesondere im Teillastbetrieb vor ihrem Eintritt in den Teillastverdichter 10 zwischenzukühlen. Auslassseitig ist ein Kamin 17 vorgesehen, durch welchen das Abgas an die Umgebung ausgestoßen wird. Wie die Figur 1 erkennen lässt, wird die angesaugte Frischluft ebenfalls durch den Kamin 17 geführt und hier vorgewärmt.

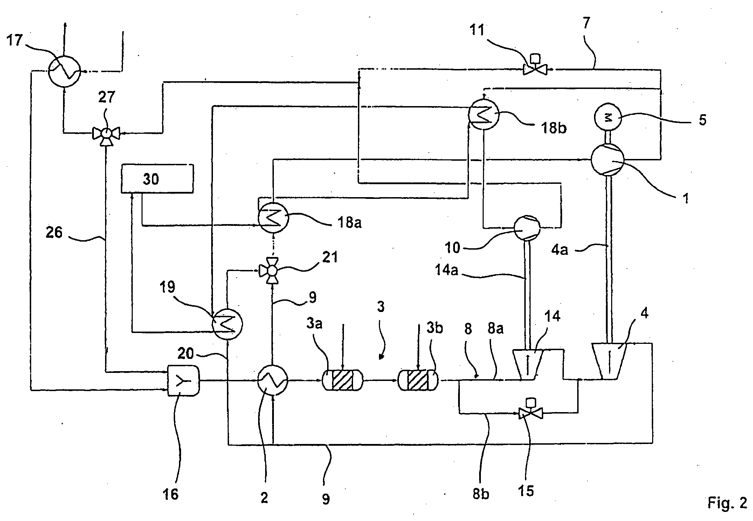

Wie in Figur 2 dargestellt ist, kann die angesaugte Frischluft auch mit Abgasen vermischt werden. Hierzu ist die Abgasleitung 9 stromabwärts von dem Teillastverdichter 10 mit der Verbrennungsluftzuführleitung 6 über eine Rückführungsleitung 26 mit einer Mischeinrichtung 16 verbunden. An dem Anschlusspunkt der Rückführungsleitung 26 an die Abgasleitung 9 ist ein Steuerventil 27 vorgesehen, über welches der Abgas-Massenstrom, welcher der Verbrennungsluftzuführleitung 6 zugeführt wird, eingestellt werden kann.

Bei der in Figur 1 dargestellten Mikrogasturbine wird das aus der Verbrennungskammer 3 austretende heißende Abgas nur über die Turbine 4 entspannt. Alternativ ist in der Figur 2 eine zweite Ausführungsform dargestellt, bei welcher die heißen Abgase im Teillastbetrieb der Mikrogasturbinenanordnung zweistufig entspannt werden, nämlich zunächst über eine der Turbine 4 vorgeschaltete Teillastturbine 14 und dann über die Turbine 4 selbst. Die Teillastturbine 14 ist in einer Rauchgasleitung 8 zwischen der Brennkammer 3 und der Turbine 4 angeordnet und kann wahlweise zugeschaltet werden. Hierzu weist die Rauchgasleitung 8 eine parallel zu der Teillastturbine 14 geschaltete und diese umgehende Teillastturbinen-Bypassleitung 8b auf, in der Schaltmittel in der Form einesVentils 15 angeordnet sind, über welches die Teillastturbinen-Bypassleitung 8b geöffnet oder geschlossen werden kann.

Auf der Verdichterseite ist die Mikrogasturbine genauso ausgeführt wie bei der in Figur 1 dargestellten Ausführungsform. Der Teillastverdichter 10, der wie bei der in Figur 1 dargestellten Ausführungsform in der Abgasleitung 9 dem Verdichter 1 nachgeschaltet vorgesehen ist und im Teillastbetrieb zugeschaltet wird, sitzt dabei auf der Turbinenwelle 14a der Teillastturbine 14 und wird über diese angetrieben.

In gleicher Weise wird im Teillastbetrieb die Teillastturbine 14 zugeschaltet, indem das Ventil 15 in der Teillastverdichter-Bypassleitung 8b geschlossen wird, so dass der heiße Abgasstrom aus der Brennkammer 3 zunächst über die Teillastturbine 14 und dann über die Turbine 4 entspannt wird.

Damit wird die Teillastturbine 14 eine Hochdruck-Turbinenstufe und die Turbine 4 eine Niederdruck-Turbinenstufe.

Im Voillastbetrieb sind die Ventile 11, 15 geöffnet, so dass die angesaugte Verbrennungsluft unter Umgehung des Teillastverdichters 10 nur in dem Verdichter 1 komprimiert und nur in der Turbine 4 unter Umgehung der Teillastturbine 14 entspannt wird.

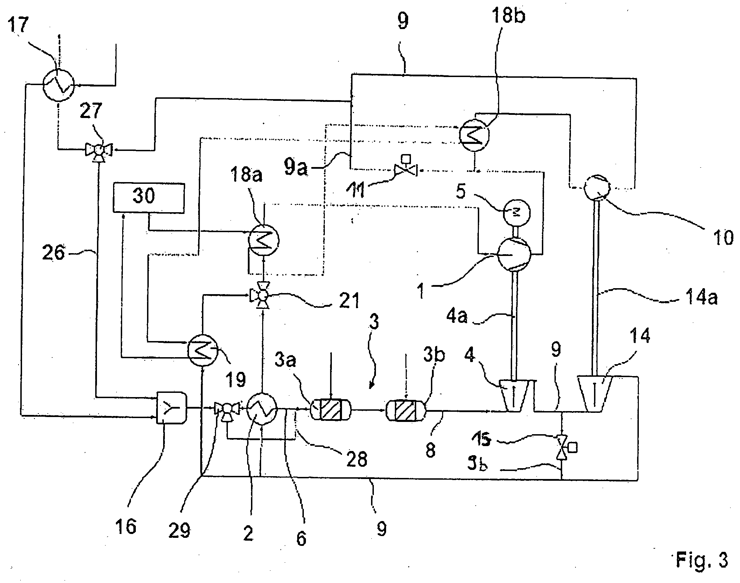

In Figur 3 ist eine alternative Ausführungsform zu der in Figur 2 dargestellten Variante dargestellt. Hier ist in gleicher Weise wie bei der ersten und zweiten Ausführungsform ein Teillastverdichter 10 in einem Leitungsabschnitt der Abgasleitung 9 vorgesehen, welcher über eine parallel dazu geschaltete Teillastverdichter-Bypassleitung 9a umgangen werden kann. Hierzu ist in der Teillastverdichter-Bypassleitung 9a ein Ventil 11 vorgesehen, über welches die Teillastverdichter-Bypassleitung 9a abgesperrt werden kann. Ebenso ist eine Teillastturbine 14 auf der Turbinenseite vorgesehen, wobei der Teillastverdichter 10 auf der Turbinenwelle 14a der Teillastturbine 14 sitzt. Im Unterschied zu der zweiten Ausführungsform ist die Teillastturbine 14 jedoch in der Abgasleitung 9 der Turbine 4 nachgeschaltet vorgesehen, wobei parallel zu dem entsprechenden Leitungsabschnitt der Abgasleitung 9 eine die Teillastturbine 14 umgehende Teillast turbinen-Bypassleitung 9b vorgesehen ist, in welcher ein Ventil 15 angeordnet ist, über welches die Teillast turbine -Bypassleitung 9b im Teillastbetrieb abgesperrt werden kann. In diesem Fall werden im Teillastbetrieb die aus der Brennkammer 3 austretenden heißen Abgase zunächst in der Turbine 4 entspannt und die dann teilweise entspannten Abgase in der Teillastturbine 14 weiter entspannt. Somit bildet hier die Turbine 4 eine Hochdruck-Turbinenstufe und die Teillastturbine 14 eine Niederdruck-Turbinenstufe. Diese Ausgestaltung hat gegenüber der in Figur 2 dargestellten zweiten Ausführungsform einer erfindungsgemäßen Mikrogasturbinenanordnung den Vorteil, dass die Abgase nach dem Verlassen der Turbine 4 schon teilentspannt und damit abgekühlt sind, so dass das Ventil 15 thermisch weniger belastet ist als das entsprechende Ventil 15 bei der zweiten Ausführungsform. Damit kann das Ventil 15 vergleichsweise kostengünstig hergestellt werden oder besitzt bei gleicher Materialauswahl eine erhöhte Lebensdauer.

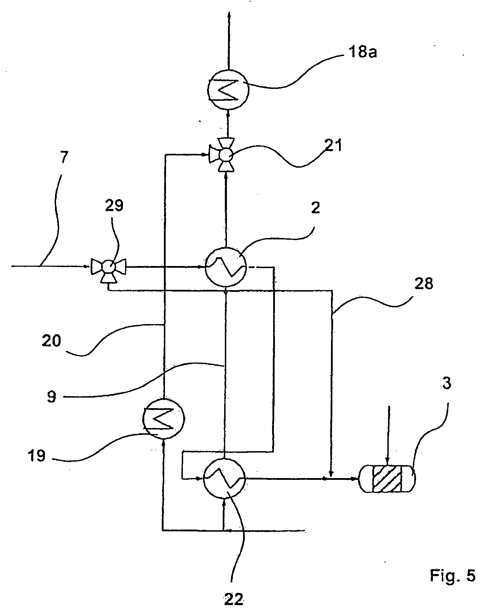

Die Ausführungsformen der Figuren 2 und 3 sind zudem mit einer flexiblen Wärmeauskopplung ausgestaltet. Ein Beispiel für eine solche flexible Wärmeauskopplung, die bei der in Figur 2 gezeigten Ausführungsform realisiert ist, ist in der Figur 5 vergrößert dargestellt. Hier ist ein zusätzlicher Wärmetauscher 19 parallel zu dem Rekuperator 2 in einer Rekuperator-Bypassleitung 20 angeordnet. Die Wärmeauskopplung erfolgt über eine Aufteilung des Abgasmassenstroms vor dessen Eintritt in den Rekuperator 2 in einen Teilstrom, welcher durch den Rekuperator 2 geführt wird, und/oder in einen Teilstrom, welcher dem Wärmetauscher 19 zugeführt wird. Die Steuerung der Abgasmassenströme erfolgt über Schaltmittel in der Form eines Ventils 21 auf der stromabwärtigen Seite des Rekuperators 2/des Wärmetauschers 19. In dem dargestellten Ausführungsbeispiel ist das Ventil 21 an der Stelle vorgesehen, wo die Abgasleitung 9 und die Rekuperator-Bypassleitung 20 wieder zusammengeführt werden. Das Ventil 21 befindet sich damit auf der "kalten" Seite von Rekuperator 2/Wärmetauscher 19, so dass es thermisch wenig beansprucht wird.

Im Normalbetrieb ist das Ventil 21 so eingestellt, dass der gesamte Abgasmassenstrom über den Rekuperator 2 geführt wird. Wird nun mehr Wärme zum Beispiel zur Warmwasser- oder Dampferzeugung benötigt als die Wärmeauskopplung über die ansonsten vorhandenen Wärmetauscher liefern kann, wird das Ventil 21 so eingestellt, dass der benötigte Abgasmassenstrom über den parallel zum Rekuperator 2 geschalteten weiteren Wärmetauscher 19 geleitet wird. Im Extremfall wird der gesamte Massenstrom über den Wärmetauscher 19 gleitet. Hierbei ist zu beachten, dass der Verbrennungsluftmassenstrom jederzeit über den Rekuperator 2 geführt wird und damit die Verbrennungsluft weniger vorgewärmt wird, wenn der Abgasmassenstrom nicht vollständig über den Rekuperator 2 geführt wird. Die flexible Wärmeauskopplung hat dementsprechend zur Folge, dass bei (vollständiger) Beaufschlagung des Wärmetauschers 19 der Brennstoffmassenstrom in der Brennkammer 3 gesteigert werden muss, was durch eine mehrstufige Brennkammer 3 erreicht werden kann. In der Ausführungsform der Figur 2 ist die Brennkammer 3 beispielhaft mit zwei seriell hintereinander liegenden Brennkammerstufen 3a, 3b ausgeführt.

Die Figur 3 zeigt eine erweiterte Variante der in Figur 2 dargestellten flexiblen Wärmeauskopplung, bei welcher eine den Rekuperator 2 umgehende Bypassleitung 28 an die Verbrennungsluftzuführleitung 6 angeschlossen ist. Dabei ist ein Ventil 29 vorgesehen, über welches der Massenstrom durch den Rekuperator 2 und/oder die Bypassleitung 28 eingestellt werden kann. Das Ventil 29 ist hier am eingangsseitigen Anschlusspunkt der Bypassteitung 28 an die Verbrennungsluftzuführleitung 6 positioniert. Die Einstellung der Massenströme durch den Rekuperator 2 erfolgt dabei in der Weise, dass der Massenstrom der Verbrennungsluft durch den Rekuperator 2 dem Massenstrom des den Rekuperator 2 durchströmenden Abgases entspricht und vorzugsweise die Massenströme gleich groß sind.

Eine derartige Bypassleitung 28 ist auch bei der in Figur 5 dargestellten Variante eines flexiblen Wärmeauskopplungskonzepts verwirklicht. Zusätzlich sind hier in der Abgasleitung 9 mehrere Rekuperatoren 2, 22 in Reihe geschaltet, wobei der in Abgasströmungsrichtung erste Rekuperator 2 einen Hochtemperatur-Rekuperator und der dahinterliegende Rekuperator 2 einen Niedertemperatur-Rekuperator bildet. Auf diese Weise kann insbesondere beim Niedertemperatur-Rekuperator 2 auf kostenintensive Werkstoffe (high temperature alloys) verzichtet werden. Die Rekuperator-Bypassleitung mit dem Wärmetauscher 19 oder anderen seriell geschalteten Wärmetauschern kann beide Rekuperatoren 2, 22 umgehen.

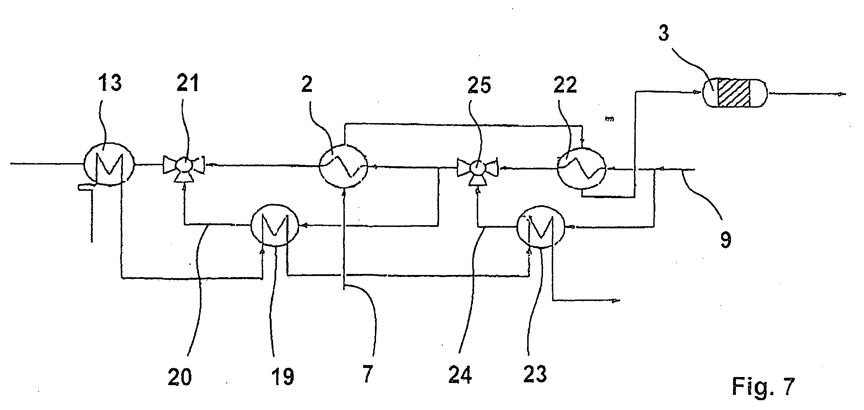

Wenn in der Abgasleitung mehrere Rekuperatoren 2, 22 hintereinander angeordnet sind, kann auch jedem dieser Rekuperatoren 2, 22 jeweils wenigstens ein hierzu parallel geschalteter Wärmetauscher 19, 23 zugeordnet sein, wie dies in Figur 7 gezeigt ist. Die entsprechenden Wärmetauscher 19, 23 sind in Rekuperator-Bypassleitungen 20, 24 vorgesehen, welche parallel zu dem korrespondierenden Rekuperatoren 2, 22 geschaltet sind und diese umgehen, wobei jeweils ein Steuerventil 21, 25 an der Stelle des Zusammenschlusses von der Abgasleitung 9 und der Rekuperator-Bypassleitungen 20, 24, in welcher der jeweilige Wärmetauscher 19, 23 platziert ist, vorgesehen ist.

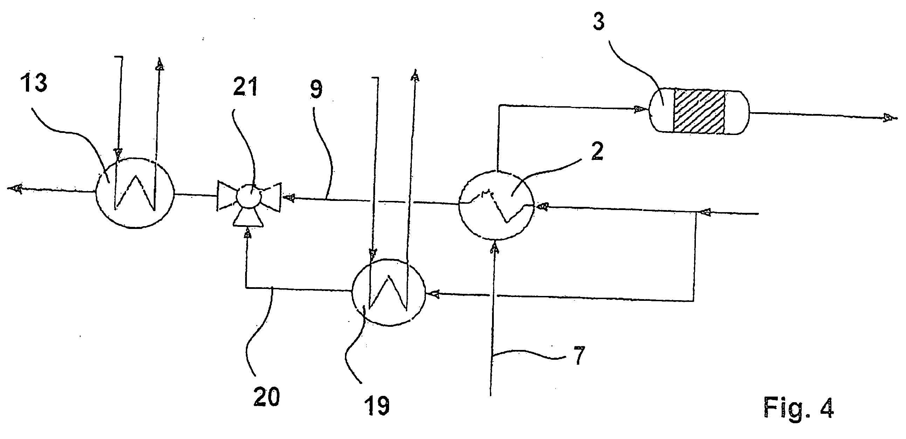

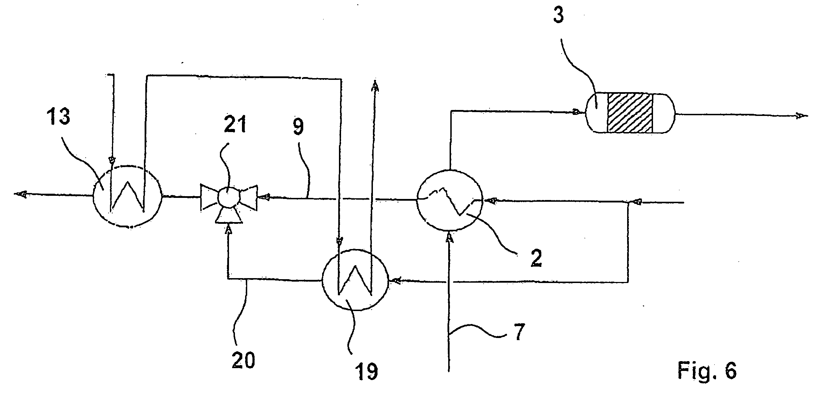

Die Wärmetauscher sind bei den Ausführungsformen der Figuren 2, 3, 6 und 7 in Reihe geschaltet, wobei sie von dem zu erhitzenden Medium nacheinander von der kalten zur warmen Seite hin durchströmt werden und an einen zentralen Verbraucher 30 angeschlossen sind. Alternativ ist es möglich, die Wärmetauscher parallel zu schalten, wie dies in Figur 4 angedeutet ist.

## Patentansprüche

1. Mikrogasturbinenanordnung mit
- einem Verdichter (1),
- einer Brennkammer (3), welche einlassseitig an eine Verbrennungsluftzuführleitung (6) angeschlossen ist und in welcher Brennstoff mit angesaugter Verbrennungsluft verbrannt wird,
- einer Turbine (4), die mit der Auslassseite der Brennkammer (3) über eine Rauchgasleitung (8) verbunden ist und durch die heißen Abgase aus der Brennkammer (3) angetrieben wird, und
- einem Generator (5) zur Stromerzeugung,
wobei der Verdichter (1) in einer Abgasleitung (9) stromabwärts von der Turbine (4) angeordnet ist, und
wobei der Verdichter (1) und der Generator (5) auf einer gemeinsamen Turbinenwelle (4a) sitzen und über die Turbine (4) angetrieben werden,
**dadurch gekennzeichnet, dass** in der Abgasleitung (9) ein zuschaltbarer Teillastverdichter (10) angeordnet ist und Schaltmittel (11) vorgesehen sind, um in einem Teillastbetrieb der Mikrogasturbinenanordnung den Teillastverdichter (10) zuzuschalten, so dass die Turbine (4) verlassende Abgase von dem Verdichter (1) und dem Teillastverdichter (10) angesaugt und verdichtet werden, und im Voillastbetrieb den Teillastverdichter (10) wegzuschalten, so dass die Abgase nur im Verdichter (1) komprimiert, jedoch an dem Teillastverdichter (10) vorbei geführt werden.

2. Mikrogasturbinenanordnung nach Anspruch 1, **dadurch gekennzeichnet, dass** in der Verbrennungsluftzuführleitung (6) der Brennkammer (3) vorgeschaltet ein Rekuperator (2) vorgesehen ist, um Verbrennungsluft vor dem Eintritt in die Brennkammer (3) vorzuwärmen, wobei die warme Seite des Rekuperators (2) mit der Turbine (4) über die Abgasleitung (9) verbunden ist, um dem Rekuperator (2) heiße Abgase zuzuführen, und der Rekuperator (2) vorzugsweise dem Verdichter (1) und Teillastverdichter (10) vorgeschaltet in der Abgasleitung (9) positioniert ist.

3. Mikrogasturbinenanordnung nach Anspruch 1 oder 2, **dadurch gekennzeichnet, dass** die Abgasleitung (9) eine parallel zu dem Teillasterverdichter (10) geschaltete und diesen umgehende Teillastverdichter-Bypassleitung (7) aufweist und als Schaltmittel wenigstens ein Ventil (11) in der Teillastverdichter-Bypassleitung (7) angeordnet ist, und/oder dass der Teillastverdichter (10) mit der Turbinenwelle (4a) im Teillas betried über eine Kupplung (12) verbunden ist und von dieser angetrieben wird und im Volllastbetrieb von der Turbinenwelle (4a) entkoppelt ist.

4. Mikrogasturbinenanordnung nach einem der Ansprüche 1 bis 3, **dadurch gekennzeichnet, dass** in der Rauchgasleitung (8) zwischen der Brennkammer (3) und der Turbine (4) eine zuschaltbare Teillastturbine (14) angeordnet ist und Schaltmittel (15) vorgesehen sind, die im Teillastbetrieb der Mikrogasturbinenanordnung die Teillastturbine (14) zuschalten, so dass die heißen Abgase aus der Brennkammer (3) hintereinander in der Teillastturbine (14) und der Turbine (4) entspannt werden, und im Voillastbetrieb der Mikrogasturbinenanordnung die Teillastturbine (14) abschalten, so dass die heißen Abgase an der Teillastturbine (14) vorbeiströmen und nur in der Turbine (4) entspannt werden, wobei insbesondere die Rauchgasleitung (8) eine parallel zu der Teillastturbine (14) geschaltete und diese umgehende Teillastturbinen-Bypassleitung (8b) aufweist, und bevorzugt als Schaltmittel wenigstens ein Ventil (15) in der Teillastturbinen-Bypassleitung (8b) angeordnet ist.

5. Mikrogasturbinenanordnung nach Anspruch 4, **dadurch gekennzeichnet, dass** der Teillastverdichter (10) auf der Turbinenwelle (14a) der Teillastturbine (14) sitzt und über diese angetrieben wird.

6. Mikrogasturbinenanordnung nach Anspruch 2 und ggf. einem weiteren der vorherigen Ansprüche, **dadurch gekennzeichnet, dass** in der Abgasleitung (9), insbesondere zwischen der Turbine (4) und dem Rekuperator (2), eine zuschaltbare Teillastturbine (14) angeordnet ist und Schaltmittel 15 vorgesehen sind, die im Teillastbetrieb der Mikrogasturbinenanordnung die Teillastturbine (14) zuschalten, so dass die heißen Abgase aus der Brennkammer (3) hintereinander in der Turbine (4) und der Teillastturbine (14) entspannt werden, und im Voillastbetrieb der Mikrogasturbinenanordnung die Teillastturbine (14) abschalten, so dass die heißen Abgase an der Teillastturbine (14) vorbeiströmen und nur in der Turbine (4) entspannt werden, wobei insbesondere die Abgasleitung (9) eine parallel zu der Teillastturbine (14) geschaltete und diese umgehende Teillast turbinen-Bypassleitung 9b aufweist, und bevorzugt als Schaltmittel wenigstens ein Ventil 15 in der Teillastturbinen-Bypassleitung (9b) angeordnet ist.

7. Mikrogasturbinenanordnung nach Anspruch 6, **dadurch gekennzeichnet, dass** der Teillastverdichter (10) auf der Turbinenwelle (14a) der Teillastturbine (14) sitzt und über diese angetrieben wird.

8. Mikrogasturbinenanordnung nach einem der Ansprüche 4 bis 7, **dadurch gekennzeichnet, dass** zwischen der Turbine (4) und der Teillastturbine (14) ein Zwischenüberhitzer insbesondere in der Form einer weiteren Brennkammer vorgesehen ist, in welcher im Teillastbetrieb die heißen Abgase weiter erwärmt werden.

9. Mikrogasturbinenanordnung nach einem der vorherigen Ansprüche, **dadurch gekennzeichnet, dass** zwischen dem Verdichter (1) und dem Teillastverdichter (10) eine Kühleinrichtung insbesondere in der Form eines Wärmetauschers vorgesehen ist, in welchem im Teillastbetrieb die vorverdichtete Luft vor dem Eintritt in die zweite Verdichtungsstufe abgekühlt wird.

10. Mikrogasturbinenanordnung nach Anspruch 2 und ggf. einem weiteren der vorherigen Ansprüche, **dadurch gekennzeichnet, dass** dem Rekuperator (2) vor- und/oder nachgeschaltet wenigstens ein Wärmetauscher (13) in der Abgasleitung (9) angeordnet ist, um aus der Mikrogasturbine Wärme auszukoppeln.

11. Mikrogasturbinenanordnung nach Anspruch 2 und ggf. einem weiteren der vorherigen Ansprüche, **dadurch gekennzeichnet, dass** in der Abgasleitung (9) seriell zu dem Rekuperator (2) wenigstens ein weiterer Rekuperator (22) vorgesehen ist, wobei die Rekuperatoren (2, 22) auf der kalten Seite nacheinander von der Verbrennungsluft und auf der heißen Seite von den heißen Abgasen durchströmt werden.

12. Mikrogasturbinenanordnung nach Anspruch 2 und ggf. einem weiteren der vorherigen Ansprüche, **dadurch gekennzeichnet, dass** in der Abgasleitung (9) parallel zu dem Rekuperator (2)/den Rekuperatoren (2, 22) wenigstens ein Wärmetauscher (19, 23) angeordnet ist, um Wärme aus der Mikrogasturbinenanordnung auszukoppeln, wobei der Abgasstrom durch den Rekuperator (2)/die Rekuperatoren (2, 22) einerseits und/oder den parallel dazu geschalteten Wärmetauscher (19, 23) andererseits durch entsprechende Ventilmittel (21) steuerbar ist, wobei insbesondere die Ventilmittel (21) zur Steuerung des Abgasstroms stromabwärts von dem Rekuperator (2)/den Rekuperatoren (2, 22) und dem Wärmetauscher (19) bevorzugt an der Stelle, wo die Abgasleitung (9) und die parallele Rekuperator-Bypassleitung (20), in welcher der Wärmetauscher (19) vorgesehen ist, zusammengeführt werden, vorgesehen sind.

13. Mikrogasturbinenanordnung nach Anspruch 11 und ggf. nach Anspruch 12, **dadurch gekennzeichnet, dass** in der Abgasleitung (9) parallel zu einem Rekuperator (2) in einer Rekuperator-Bypassleitung (20) wenigstens ein Wärmetauscher (19) und parallel zu einem weiteren Rekuperator (22) in einer weiteren Rekuperator-Bypassleitung (24) wenigstens ein Wärmetauscher (23) angeordnet ist, um Wärme aus der Mikrogasturbinenanordnung auszukoppeln, wobei der Abgasstrom durch die Rekuperatoren (2, 22) einerseits und/oder die jeweils parallel dazu geschalteten Wärmetauscher (19, 23) andererseits durch entsprechende Ventilmittel (21, 25) steuerbar ist, wobei insbesondere die Ventilmittel (21, 25) zur Steuerung des Abgasstroms jeweils stromabwärts von den Rekuperatoren (2, 22) und den parallel dazu geschalteten Wärmetauschern (19, 23) angeordnet sind und bevorzugt jeweils an der Stelle positioniert sind, wo die Abgasleitung (9) und die Rekuperator-Bypassleitungen (20, 24), in denen die Wärmetauscher (19, 23) angeordnet sind, zusammengeführt werden.

14. Mikrogasturbinenanordnung nach Anspruch 2 und ggf. einem weiteren der vorherigen Ansprüche, **dadurch gekennzeichnet, dass** in der Verbrennungsluftzuführleitung (6) eine den Rekuperator (2)/die Rekuperatoren (2, 22) umgehende Bypassleitung (28) vorgesehen ist, und dass Ventilmittel (29) vorgesehen sind, um den Abgasstrom durch den Rekuperator (2)/die Rekuperatoren (2, 22) und/oder die parallele Bypassleitung (30) insbesondere in der Weise zu steuern, dass die Massenströme der durch den Rekuperator (2)/die Rekuperatoren (2, 22) strömenden Verbrennungsluft und der durch den Rekuperator (2)/die Rekuperatoren (2, 22) strömenden Abgase gleich sind.

15. Mikrogasturbinenanordnung nach einem der vorherigen Ansprüche, **dadurch gekennzeichnet, dass** die Abgasleitung (9) mit der Verbrennungsluftzuführleitung (6) durch eine Rückführungsleitung (26) verbunden ist, um der Verbrennungsluft Abgase zuzumischen, und/ oder dass mehrere Wärmetauscher (13, 17, 19, 23) vorgesehen sind und die kalten Seiten der Wärmetauscher (13, 17, 19, 23) seriell miteinander verbunden sind, so dass ein zu erwärmendes Fluid nacheinander in den Wärmetauschern (13, 17, 19, 23) erwärmt wird.

## Claims

1. Micro gas turbine assembly with
- a compressor (1),
- a combustion chamber (3), which is attached to a combustion air supply pipe at its inlet side and in which fuel is burned with sucked-in combustion air,
- a turbine (4), which is connected with the outlet side of the combustion chamber (3) by a flue gas pipe and is driven by the hot exhaust gases from the combustion chamber (3), and
- a generator (5) for electricity generation,
wherein the compressor (1) is disposed in an exhaust gas pipe (9) downstream of the turbine (4), and
wherein the compressor (1) and the generator (5) are placed on a common turbine shaft (4a) and are driven by the turbine (4),
**characterized in that** a switchable partial load compressor (10) is disposed in the exhaust gas pipe (9) and switching means (11) are provided for switching on the partial load compressor (10) in a partial load operation of the micro gas turbine assembly, so that the exhaust gases, which are leaving the turbine (4) are sucked in and compressed by the compressor (1) and the partial load compressor (10), and for switching off the partial load compressor (10) in full load operation, so that the exhaust gases are only compressed in the compressor (1) bypassing the partial load compressor (10).

2. Micro gas turbine assembly according to claim 1, **characterized in that** in the combustion air supply pipe (6) upstream of the combustion chamber (3) a recuperator (2) is provided for preheating the combustion air in front of the inlet of the combustion chamber (3), wherein the hot side of the recuperator (2) is connected with the turbine (4) by the exhaust gas pipe (9) for providing hot exhaust gases to the recuperator (2), and preferably the recuperator (2) is positioned in the exhaust gas pipe (9) upstream of the compressor (1) and the partial load compressor (10).

3. Micro gas turbine assembly according to claim 1 or 2, **characterized in that** the exhaust gas pipe (9) possesses a partial load compressor bypass pipe (7), which is connected in parallel to the partial load compressor (10) and bypassing the same, and at least a valve (11) is disposed in the partial load compressor bypass pipe (7) as switching means, and/or that the partial load compressor (10) is connected with the turbine shaft (4a) in the partial load operation by a coupling (12) and is driven by the same and is decoupled from the turbine shaft (4a) in full load operation.

4. Micro gas turbine assembly according to one of claims 1 to 3, **characterized in that** in the flue gas pipe (8) between the combustion chamber (3) and the turbine (4) a switchable partial load turbine (14) is disposed and switching means (15) are provided, which are switching on the partial load turbine (14) in partial load operation of the micro gas turbine assembly, so that the hot exhaust gases of the combustion chamber (3) are released consecutively in the partial load turbine (14) and the turbine (4), and are switching off the partial load turbine (14) in full load operation of the micro gas turbine assembly, so that the hot exhaust gases are bypassing the partial load turbine (14) and are only released in the turbine (4), wherein particularly the flue gas pipe (8) possesses a partial load turbine bypass pipe (8b), which is connected in parallel to the partial load turbine (14) and is bypassing the same, and preferably at least a valve (15) is disposed in the partial load turbine bypass pipe (8b) as switching means.

5. Micro gas turbine assembly according to claim 4, **characterized in that** the partial load compressor (10) is placed on the turbine shaft (14a) of the partial load turbine (14) and is driven by the same.

6. Micro gas turbine assembly according to claim 2 and where appropriate another of the preceding claims, **characterized in that** a switchable partial load turbine (14) is disposed in the exhaust gas pipe (9), particularly between the turbine (4) and the recuperator (2) and switching means (15) are provided, which are switching on the partial load turbine (14) in the partial load operation of the micro gas turbine assembly, so that the hot exhaust gases of the combustion chamber (3) are released consecutively in the turbine (4) and the partial load turbine (14), and are switching off the partial load turbine (14) in the full load operation of the micro gas turbine assembly, so that the hot exhaust gases are bypassing the partial load turbine (14) and are only released in the turbine (4), wherein particularly the exhaust gas pipe (9) possesses a partial load turbine bypass valve (9b), which is connected in parallel to the partial load turbine (14) and is bypassing the same, and preferably at least a valve (15) is disposed in the partial load turbine bypass pipe (9b) as switching means.

7. Micro gas turbine assembly according to claim 6, **characterized in that** the partial load compressor (10) is placed on the turbine shaft (14a) of the partial load turbine (14) and is driven by the same.

8. Micro gas turbine assembly according to one of the claims 4 to 7, **characterized in that** between the turbine (4) and the partial load turbine (14) a reheater particularly in the form of a further combustion chamber is provided, in which the hot exhaust gases are further heated in partial load operation.

9. Micro gas turbine assembly according to one of the preceding claims, **characterized in that** a cooling device particularly in the form of a heat exchanger is provided between the compressor (1) and the partial load compressor (10) in which the precompressed air is cooled down before entering the second compression stage in partial load operation.

10. Micro gas turbine assembly according to claim 2 and where appropriate another of the preceding claims, **characterized in that** at least a heat exchanger (13) in the exhaust gas pipe (9) is disposed upstream and/or downstream to the recuperator (2) for decoupling heat out of the micro gas turbine.

11. Micro gas turbine assembly according to claim 2 and where appropriate another of the preceding claims, **characterized in that** a further recuperator (22) is provided in the exhaust gas pipe (9) connected in series to the recuperator (2), wherein on the cold side by the combustion air and on the hot side by the hot exhaust gases pass through the recuperators (2, 22) consecutively.

12. Micro gas turbine assembly according to claim 2 and where appropriate another of the preceding claims, **characterized in that** at least a heat exchanger (19, 23) is disposed in the exhaust gas pipe (9) connected in parallel to the recuperator (2)/the recuperators (2, 22) for decoupling heat out of the micro gas turbine assembly, wherein the exhaust gas flow through the recuperator (2)/the recuperators (2, 22) on the one hand and/or to the heat exchangers (19, 23) connected in parallel thereto on the other hand is controllable by respective valve means, wherebin particularly the valve means (21) for controlling the exhaust gas flow are provided downstream of the recuperator (2)/the recuperators (2, 22) and the heat exchanger (19) preferably at the position, where the exhaust gas pipe (9) and the parallel recuperator bypass pipe (20), in which the heat exchanger (19) is provided, are joining.

13. Micro gas turbine assembly according to claim 11 and where appropriate according to claim 12, **characterized in that** at least one heat exchanger (19) is disposed in the exhaust gas pipe (9) connected in parallel to a recuperator (2) in a recuperator bypass pipe (20) and at least a heat exchanger (23) is connected in parallel to a further recuperator (22) in a further recuperator bypass pipe (24) for decoupling heat out of the micro gas turbine assembly, wherein the exhaust gas flow through the recuperators (2, 22) on the one hand and/or the respectively through the heat exchangers (19, 23) connected in parallel thereto on the other hand by corresponding valve means (21, 25), wherein particularly the valve means (21, 25) is controllable for controlling the exhaust gas flow are disposed respectively downstream of the recuperators (2, 22) and the heat exchangers (19, 23) connected in parallel thereto and are preferably placed, where the exhaust gas pipe (9) and the recuperator bypass pipe (20, 24), in which the heat exchangers (19, 23) are disposed, are joining.

14. Micro gas turbine assembly according to claim 2 and where appropriate according to another of the preceding claims, **characterized in that** a bypass pipe (28), which bypasses the recuperator (2)/the recuperators (2, 22), is provided in the combustion air supply pipe (6), and that valve means (29) are provided for controlling the exhaust gas flow through the recuperator (2)/the recuperators (2, 22) and/or the parallel bypass pipe (30) particularly in such a way, that the mass flow of the combustion air, which passes through the recuperator (2)/the recuperators (2, 22) and the mass flow of the exhaust gases, which passes through the recuperator (2)/the recuperators (2, 22), are equal.

15. Micro gas turbine assembly according to one of the preceding claims, **characterized in, that** the exhaust gas pipe (9) is connected with the combustion air supply pipe (6) by a return pipe (26) for adding exhaust gases to the combustion air, and/or that several heat exchangers (13, 17, 29, 23) are provided and the cold sides of the heat exchangers (13, 17, 19, 23) are interconnected in series, so that a fluid to be heated is heated consecutively in the heat exchangers (13, 17, 19, 23).

## Revendications

1. Disposition de micro-turbine à gaz
avec
- un compresseur (1),
- une chambre de combustion (3), qui, au côté admission est raccordée à une conduite d'alimentation en air de combustion (6) et dans laquelle du combustible est brûlé avec de l'air de combustion aspiré,
- une turbine (4), qui est reliée avec le côté sortie de la chambre de combustion (3) via une conduite à gaz de fumée (8) et est entraînée par les gaz d'échappement chauds provenant de la chambre de combustion (3), et
- un générateur (5) en vue de la production d'électricité,
le compresseur (1) étant disposé dans une conduite à gaz d'échappement (9) en aval de la turbine (4), et
le compresseur (1) et le générateur (5) étant placés sur un arbre de turbine commun (4a) et étant entraînés via la turbine (4),
**caractérisée en ce que** dans la conduite à gaz d'échappement (9), un compresseur à charge partielle (10) qui peut être mis en circuit est disposé et des dispositifs de commutation (11) sont prévus afin de mettre en circuit le compresseur à charge partielle (10) dans un fonctionnement à charge partielle de la disposition de micro-turbine à gaz, de sorte que les gaz d'échappement quittant la turbine (4) sont aspirés et comprimés par le compresseur (1) et le compresseur à charge partielle (10), et afin de déconnecter le compresseur à charge partielle (10) au fonctionnement à pleine charge, de sorte que les gaz d'échappement sont comprimés uniquement dans le compresseur (1), mais acheminés en contournant le compresseur à charge partielle (10).

2. Disposition de micro-turbine à gaz selon la revendication 1, **caractérisée en ce que** placé dans la conduite d'alimentation en air de combustion (6) en amont de la chambre de combustion (3), un récupérateur (2) est prévu afin de préchauffer de l'air de combustion avant l'admission dans la chambre de combustion (3), le côté chaud du récupérateur (2) étant relié à la turbine (4) via la conduite à gaz d'échappement (9), afin d'alimenter des gaz d'échappement chauds dans le récupérateur (2), et le récupérateur (2) étant positionné de préférence connecté en amont du compresseur (1) et du compresseur à charge partielle (10) dans la conduite à gaz d'échappement (9).

3. Disposition de micro-turbine à gaz selon les revendications 1 ou 2, **caractérisée en ce que** la conduite à gaz d'échappement (9) présente une conduite de dérivation du compresseur à charge partielle (7) connectée en parallèle par rapport au compresseur à charge partielle (10) et contournant celui-ci, et **en ce qu'**au moins une soupape (11) est disposée comme dispositif de commutation dans la conduite de dérivation du compresseur à charge partielle (7) et/ou **en ce que** le compresseur à charge partielle (10) est relié à l'arbre de turbine (4a) dans la plage de charge partielle via un coupleur (12) et entraîné par celui-ci, puis découplé de l'arbre de turbine (4a) au fonctionnement à pleine charge.

4. Disposition de micro-turbine à gaz selon une quelconque des revendications 1 à 3, **caractérisée en ce que** dans la conduite à gaz de fumée (8), une turbine à charge partielle (14) mettable en circuit est disposée entre la chambre de combustion (3) et la turbine (4) et **en ce que** des dispositifs de commutation (15) sont prévus, qui mettent en circuit la turbine à charge partielle (14) au fonctionnement à charge partielle de la disposition de micro-turbine à gaz, de sorte que les gaz d'échappement chauds provenant de la chambre de combustion (3) sont relâchés successivement dans la turbine à charge partielle (14) et la turbine (4), et déconnectent la turbine à charge partielle (14) au fonctionnement en pleine charge de la disposition de micro-turbine à gaz, de sorte que les gaz d'échappement chauds contournent la turbine à charge partielle (14) et sont relâchés uniquement dans la turbine (4), la conduite à gaz de fumée (8) présentant notamment une conduite de dérivation de la turbine à charge partielle (8b) connectée en parallèle par rapport à la turbine à charge partielle (14) et contournant celle-ci, et de préférence au moins une soupape (15) est disposée comme dispositif de commutation dans la conduite de dérivation de la turbine à charge partielle (8b).

5. Disposition de micro-turbine à gaz selon la revendication 4, **caractérisée en ce que** le compresseur à charge partielle (10) se trouve sur l'arbre de turbine (14a) de la turbine à charge partielle (14) et est entraîné via celui-ci.

6. Disposition de micro-turbine à gaz selon la revendication 2 et le cas échéant une autre des revendications précédentes, **caractérisée en ce que** dans la conduite à gaz de fumée (9), une turbine à charge partielle (14) mettable en circuit est disposée notamment entre la turbine (4) et le récupérateur (2), et **en ce que** des dispositifs de commutation (11) sont prévus, qui mettent en circuit la turbine à charge partielle (14) au fonctionnement à charge partielle de la disposition de micro-turbine à gaz, de sorte que les gaz d'échappement chauds provenant de la chambre de combustion (3) sont relâchés successivement dans la turbine (4) et la turbine à charge partielle (14), et déconnectent la turbine à charge partielle (14) au fonctionnement en pleine charge de la disposition de micro-turbine à gaz, de sorte que les gaz d'échappement chauds contournent la turbine à charge partielle (14) et sont relâchés uniquement dans la turbine (4), la conduite à gaz d'échappement (9) présentant notamment une conduite de dérivation du compresseur à charge partielle (7) connectée en parallèle par rapport à la turbine à charge partielle (14) et contournant celle-ci, et de préférence au moins une soupape (11) est disposée comme second dispositif de commutation dans la conduite de dérivation de la turbine à charge partielle (9b).

7. Disposition de micro-turbine à gaz selon la revendication 6, **caractérisée en ce que** le compresseur à charge partielle (10) est placé sur l'arbre de turbine (14a) de la turbine à charge partielle (14) et entraîné via celui-ci.

8. Disposition de micro-turbine à gaz selon une quelconque des revendications 4 à 7, **caractérisée en ce que** entre la turbine (4) et la turbine à charge partielle (14), un surchauffeur intermédiaire est prévu notamment sous la forme d'une autre chambre de combustion, dans laquelle les gaz d'échappement chauds sont réchauffés davantage en fonctionnement à charge partielle.

9. Disposition de micro-turbine à gaz selon une quelconque des revendications précédentes, **caractérisée en ce que** entre le compresseur (1) et le compresseur à charge partielle (10), un dispositif de refroidissement est prévu notamment sous la forme d'un échangeur thermique, dans lequel en fonctionnement à charge partielle, l'air comprimé préliminairement est refroidi avant l'admission au second niveau de compression.

10. Disposition de micro-turbine à gaz selon la revendication 2 et le cas échéant, une autre des revendications précédentes, **caractérisée en ce que** connecté en amont et/ou en aval du récupérateur (2), au moins un échangeur thermique (13) est disposé dans la conduite à gaz d'échappement (9), afin de découpler de la chaleur hors de la micro-turbine à gaz.

11. Disposition de micro-turbine à gaz selon la revendication 2 et le cas échéant, une autre des revendications précédentes, **caractérisée en ce que** dans la conduite à gaz d'échappement (9), au moins un autre récupérateur (22) est prévu en série par rapport au récupérateur (2), les récupérateurs (2, 22) étant traversés du côté froid successivement par l'air de combustion et du côté chaud par les gaz d'échappement chauds.

12. Disposition de micro-turbine à gaz selon la revendication 2 et le cas échéant, une autre des revendications précédentes, **caractérisée en ce que** dans la conduite à gaz d'échappement (9), et parallèlement au récupérateur (2)/aux récupérateurs (2, 22), au moins un échangeur thermique (19, 23) est disposé, afin de découpler de la chaleur provenant de la disposition de micro-turbine à gaz, le flux de gaz d'échappement étant commandable par des dispositifs de soupape correspondants (21) d'une part par le récupérateur (2)/les récupérateurs (2, 22) et/ou par l'échangeur thermique (19, 23) connecté en parallèle à ceux-ci d'autre part, les dispositifs de soupape (21) étant notamment prévus en vue de la commande du flux de gaz d'échappement en aval du récupérateur (2)/des récupérateurs (2, 22) et/ou de l'échangeur thermique (19) de préférence à l'endroit où sont réunies la conduite à gaz d'échappement (9) et la conduite de dérivation de récupérateur parallèle (20), dans laquelle l'échangeur thermique (19) est prévu.

13. Disposition de micro-turbine à gaz selon la revendication 11 et le cas échéant, selon la revendication 12, **caractérisée en ce que** dans la conduite à gaz d'échappement (9), et parallèlement à un récupérateur (2) dans une conduite de dérivation de récupérateur (20), au moins un échangeur thermique (19), et en parallèle à un autre récupérateur (22) dans une autre conduite de dérivation de récupérateur (24) au moins un échangeur thermique (23) est disposé, afin de découpler de la chaleur provenant de la disposition de micro-turbine à gaz, le flux de gaz d'échappement étant commandable par des dispositifs de soupape correspondants (21, 25) d'une part par les récupérateurs (2, 22) et/ou par les échangeurs thermiques (19, 23) connectés en parallèle à ceux-ci d'autre part, les dispositifs de soupape (21, 25) étant notamment disposés en vue de la commande du flux de gaz d'échappement respectivement en aval des récupérateurs (2, 22) et des échangeurs thermiques (19, 23) connectés en parallèle à ceux-ci, et positionnés de préférence à l'endroit où sont réunies la conduite à gaz d'échappement (9) et les conduites de dérivation de récupérateur (20, 24), dans lesquelles les échangeurs thermiques (19, 23) sont disposés.

14. Disposition de micro-turbine à gaz selon la revendication 2 et le cas échéant, une autre des revendications précédentes, **caractérisée en ce que** dans la conduite d'alimentation en air de combustion (6) est prévue une conduite de dérivation (28) contournant le récupérateur (2)/les récupérateurs (2, 22), et **en ce que** des dispositifs de soupape (29) sont prévus afin de commander le flux de gaz d'échappement par le récupérateur (2)/les récupérateurs (2, 22) et/ou la conduite de dérivation parallèle (30) notamment de la manière à ce que les flux massiques de l'air de combustion circulant à le récupérateur (2)/les récupérateurs (2, 22) et des gaz d'échappement circulant à le récupérateur (2)/les récupérateurs (2, 22) soient identiques.

15. Disposition de micro-turbine à gaz selon une quelconque des revendications précédentes, **caractérisée en ce que** la conduite à gaz d'échappement (9) est reliée à la conduite d'alimentation en air de combustion (6) par une conduite de remise en circulation (26), afin de mélanger des gaz d'échappement à l'air de combustion, et/ou **en ce que** plusieurs échangeurs thermiques (13, 17, 19, 23) sont prévus et les côtés froids des échangeurs thermiques (13, 17, 19, 23) sont reliés en série les uns aux autres, de sorte qu'un fluide à réchauffer est réchauffé successivement dans les échangeurs thermiques (13, 17, 19, 23).
